# EUROPÄISCHE PATENTSCHRIFT

(11) **EP 3 508 051 B1**
(45) Veröffentlichungstag und Bekanntmachung des Hinweises auf die Patenterteilung: **16.09.2020**
(21) Anmeldenummer: 18203306.8
(22) Anmeldetag: 30.10.2018
(51) Int. Cl.: A01D 75/18, A01D 41/127

(54) **LANDWIRTSCHAFTLICHE ARBEITSMASCHINE, INSBESONDERE MÄHDRESCHER**
AGRICULTURAL WORK MACHINE, IN PARTICULAR COMBINE HARVESTER
ENGIN AGRICOLE, EN PARTICULIER MOISSONNEUSE-BATTEUSE

(30) Priorität: 08.01.2018 DE 102018100257
(43) Veröffentlichungstag der Anmeldung: 10.07.2019
(73) Patentinhaber: CLAAS Selbstfahrende Erntemaschinen GmbH, 33428 Harsewinkel (DE)
(72) Erfinder: Wilken, Andreas, 49143 Bissendorf (DE); Baumgarten, Joachim, 48361 Beelen (DE); Heitmann, Christoph, 48231 Warendorf (DE); Bormann, Bastian, 33334 Gütersloh (DE)
(74) Vertreter: CLAAS Gruppe

(56) Entgegenhaltungen:
- EP-A1- 1 221 280
- EP-A1- 1 406 001
- EP-A1- 1 724 730
- EP-B1- 2 322 028
- US-A1- 2017 127 611

## Beschreibung

Die vorliegende Erfindung betrifft eine landwirtschaftliche Arbeitsmaschine, insbesondere einen Mähdrescher, gemäß dem Oberbegriff von Anspruch 1. Landwirtschaftliche Arbeitsmaschinen, zu denen insbesondere selbstfahrende Erntemaschinen wie Mähdrescher und Feldhäcksler zählen, weisen regelmäßig verschiedene Arbeitsorgane zur Durchführung oder Unterstützung landwirtschaftlicher Arbeit auf. Beispiele für Arbeitsorgane eines Mähdreschers sind unter anderem das Schneidwerk, das dem Schneidwerk nachgeschaltete Dreschwerk, die dem Dreschwerk nachgeschaltete Trenneinrichtung, die der Trenneinrichtung nachgeschaltete Reinigungs- und Siebeinrichtung, die der Siebeinrichtung nachgeschaltete Überkehr und der der Trenneinrichtung nachgeschaltete Häcksler.

Die verschiedenen Arbeitsorgane werden mit wechselnden Parametern, den sog. Arbeitsparametern bzw. Maschinenparametern, betrieben. Für einen optimalen Betrieb der landwirtschaftlichen Arbeitsmaschine werden diese Arbeitsparameter in Abhängigkeit von verschiedenen Betriebsparametern der landwirtschaftlichen Arbeitsmaschine eingestellt. Betriebsparameter der landwirtschaftlichen Arbeitsmaschine sind beispielsweise die Art, die Menge und die Beschaffenheit des Feldbestands und des durch die landwirtschaftliche Arbeitsmaschine geleiteten Ernteguts. Die genannten Einstellungen von Arbeitsparametern, beispielsweise die Einstellung der jeweiligen Drehzahl einzelner oder mehrerer Arbeitsorgane, basierend auf den erfassten Betriebsparametern erfolgt gemäß dem Stand der Technik aus der EP 2 322 028 B1 mittels eines Fahrerassistenzsystems der landwirtschaftlichen Arbeitsmaschine. Ein solches Fahrerassistenzsystem ist so beschaffen, dass es die optimierten Arbeitsparameter in der Regel sofort an dem entsprechenden Arbeitsorgan einstellt. Eine landwirtschaftliche Maschine nach dem Oberbegriff des Anspruchs 1 ist aus der Druckschrift US-A1-2017/0127611 bekannt, die eine Sensorik zur Überwachung einer Vibrationsentwicklung in der Arbeitsmaschine aufweist.

Während des Betriebs der landwirtschaftlichen Arbeitsmaschine, beispielsweise während einer Erntefahrt, kann es dazu kommen, dass das Fahrerassistenzsystem eine optimierte Dreschtrommeldrehzahl ermittelt und diese unmittelbar an dem Dreschwerk einstellt. Die eingestellte Dreschtrommeldrehzahl kann dabei im Bereich einer Eigenfrequenz des Mähdreschers liegen. Beispielsweise führt die Rotation der Dreschtrommel, beispielsweise auf Grund einer ungleichmäßigen Verteilung von Erntegut innerhalb der Dreschtrommel, zu einer Unwucht, die sich in einer mechanischen Schwingung äußert, die der Eigenfrequenz eines Bauteils des Mähdreschers entspricht oder zumindest sehr nahe kommt. Das führt dazu, dass das entsprechende Bauteil des Mähdreschers verstärkt mitschwingt, was als Resonanz bezeichnet wird. Bei konstanter Einwirkung der Anregung des jeweiligen Bauteils im Bereich seiner Eigenfrequenz kann die Schwingung sogar um ein Vielfaches höher als die Eigenfrequenz sein. Die Folge ist, dass das jeweilige Bauteil und damit die landwirtschaftliche Arbeitsmaschine deutlich lauter wird und/oder stärker vibriert. Dies kann der Fahrer unter Umständen als äußerst unangenehm empfinden und ihn dazu veranlassen, das jeweilige Arbeitsorgan manuell abzuschalten, das er als Verursacher der Geräusch- und/oder Vibrationsentwicklung ansieht. Dies stört nicht nur den Betriebsablauf der landwirtschaftlichen Arbeitsmaschine, sondern kann auch weitergehende Folgen haben, da beispielsweise der Einzugskanal verstopfen kann, wenn das Erntegut nicht vom Dreschwerk weiterverarbeitet wird.

Der Erfindung liegt das Problem zu Grunde, eine landwirtschaftliche Arbeitsmaschine derart auszugestalten und weiterzubilden, dass während des Betriebs eine für den Fahrer unangenehme Geräusch- und/oder Vibrationsentwicklung möglichst vermieden wird.

Das obige Problem wird bei einer landwirtschaftlichen Arbeitsmaschine gemäß dem Oberbegriff von Anspruch 1 durch die Merkmale des kennzeichnenden Teils von Anspruch 1 gelöst.

Wesentlich ist die grundsätzliche Überlegung, die Geräusch- und/oder Vibrationsentwicklung in der landwirtschaftlichen Arbeitsmaschine zu überwachen und, wenn eine vom Fahrerassistenzsystem ermittelte optimierte Drehzahl, beispielsweise die Drehzahl des Dreschwerks oder eines anderen Arbeitsorgans, in einen kritischen Bereich kommt, diese außerhalb eines definierten Schwellwertebereichs einer Eigenfrequenz (Eigenfrequenzbereich) der landwirtschaftlichen Arbeitsmaschine zu verschieben. Mit anderen Worten erkennt die Sensorik zur Überwachung der Geräusch- und/oder Vibrationsentwicklung eine Drehzahl bzw. einen Drehzahlbereich, der insoweit kritisch ist, als er zu einer Geräusch- und/oder Vibrationszunahme führt. Das Fahrerassistenzsystem erkennt, dass die Geräusch- und/oder Vibrationszunahme dadurch entsteht, dass die eingestellte optimierte Drehzahl Schwingungen in einem Frequenzbereich verursacht, der innerhalb eines Eigenfrequenzbereichs der landwirtschaftlichen Arbeitsmaschine, d.h. eines Eigenfrequenzbereichs eines Bauteils eines Arbeitsorgans oder eines sonstigen Bauteils der landwirtschaftlichen Arbeitsmaschine, liegt. Dies kann beispielsweise durch eine Unwucht des entsprechenden Arbeitsorgans auf Grund ungleichmäßig verteilten Ernteguts innerhalb des Arbeitsorgans hervorgerufen werden. Wird nun das entsprechende Bauteil eines Arbeitsorgans oder der landwirtschaftlichen Arbeitsmaschine mit einer Frequenz angeregt, die im Wesentlichen mit seiner Eigenfrequenz übereinstimmt, kommt es zu einer Resonanz (die Amplitude der Schwingung erreicht hier ein Maximum), die vom Fahrer auf Grund einer Geräusch- und/oder Vibrationszunahme als unangenehm empfunden werden kann. Das Fahrerassistenzsystem veranlasst nun die Änderung der zuvor als optimal ermittelten Drehzahl, so dass diese außerhalb des Eigenfrequenzbereichs liegt, wodurch eine resonanzbedingte Geräusch- und/oder Vibrationszunahme verhindert oder zumindest weitestgehend verhindert wird oder resonanzbedingt gesteigerte Geräusche und/oder Vibrationen reduziert werden. Die Drehzahl des die Schwingung verursachenden rotierenden Systems, zum Beispiel des Arbeitsorgans, wird also so angepasst, dass durch das rotierende System keine Anregung mehr mit einer Frequenz erfolgt, die einer Eigenfrequenz des schwingenden Systems entspricht bzw. innerhalb des Eigenfrequenzbereichs liegt.

Es sei darauf hingewiesen, dass das jeweils in seiner Eigenfrequenz durch die Drehzahl des rotierenden Systems angeregte schwingfähige System bzw. Bauteil, das zu der resonanzbedingten Geräusch- und/oder Vibrationszunahme führt, auch mehrere Eigenfrequenzen (Schwingungsmoden) aufweisen kann. Die Drehzahl wird dann insbesondere so angepasst, dass sie außerhalb eines definierten Schwellwertebereichs jeder Eigenfrequenz des jeweiligen schwingfähigen Systems bzw. Bauteils liegt.

Vorschlagsgemäß ist nun vorgesehen, dass eine Sensorik zur Überwachung einer Geräusch- und/oder Vibrationsentwicklung in der landwirtschaftlichen Arbeitsmaschine während ihres Betriebs vorgesehen ist, die konfiguriert ist, einen kritischen Bereich einer eingestellten optimierten Drehzahl zu ermitteln, und das Fahrerassistenzsystem veranlasst, diese so zu ändern, dass sie außerhalb eines definierten Schwellwertebereichs einer Eigenfrequenz der landwirtschaftlichen Arbeitsmaschine liegt.

In den Ansprüchen 2 und 3 sind Bauteile definiert, welche einem besonderen Risiko unterliegen, Resonanzen zu verursachen. Dies können Bauteile der Fahrerkabine und/oder an der Fahrerkabine und/oder innerhalb der Fahrerkabine sein, insbesondere der Kabinenboden, die Kabinenrückwand oder das Kabinendach. Auch können dies Bauteile von Arbeitsorganen sein, insbesondere des Arbeitsorgans, dessen Drehzahl aus Optimierungsgründen vom Fahrerassistenzsystem eingestellt worden ist. Beispiele für ein entsprechendes Bauteil eines Arbeitsorgans sind der Dreschkorb eines Dreschwerks zum Entkörnen von Erntegut, der Rotorkorb einer rotierbaren Trenneinrichtung zum Trennen von Erntegutbestandteilen, das Gehäuse eines Häckslers zum Zerkleinern von Erntegut, ein Bestandteil des Schneidwerks zum Abtrennen von Erntegut aus einem Feldbestand oder ein Bauteil der Überkehr zum Zurückführen von Erntegut zum Dreschwerk.

Nach der Ausgestaltung gemäß Anspruch 4 weist die Sensorik, um den kritischen Bereich der eingestellten optimierten Drehzahl zu ermitteln, mindestens einen Sensor zur Erfassung mechanischer Schwingungen, mindestens einen Sensor zu Erfassung von Schallwellen, darunter auch Infraschall- und/oder Körperschallwellen, und/oder mindestens einen Sensor zur Erfassung des Gutflusses auf.

Anspruch 5 definiert bevorzugte Sensoren zur Erfassung mechanischer Schwingungen und entsprechend bevorzugte Anbringungsorte für einen solchen Sensor.

Anspruch 6 definiert bevorzugte Sensoren zur Erfassung von Schallwellen sowie bevorzugte Sensoren zur Erfassung des Gutflusses und entsprechend bevorzugte Anbringungsorte für einen solchen Sensor.

Nach der bevorzugten Ausgestaltung gemäß Anspruch 7 kann bei der Änderung der Drehzahl, die von dem Fahrerassistenzsystem veranlasst wird, wenn ein kritischer, d.h. akustisch ungünstiger, Bereich erreicht wird, auch der Betriebszustand der landwirtschaftlichen Arbeitsmaschine berücksichtigt werden. Dabei wird berücksichtigt bzw. unterschieden, ob die landwirtschaftliche Arbeitsmaschine im Leerlauf, unter normaler Belastung, unter einer Grenzbelastung oder in einem Überlastfall betrieben wird. Entsprechend wird ein Leerlauf-Zustand, ein normaler Belastungszustand, ein Grenzbelastungszustand und ein Überlastzustand bei der Änderung der Drehzahl berücksichtigt.

Nach der weiter bevorzugten Ausgestaltung gemäß Anspruch 8 kann, nachdem ein kritischer Bereich ermittelt worden ist, der Erntegutdurchsatz, d.h. die Durchsatzmenge, durch Verringerung der Drehzahl des Schneidwerks und/oder des Dreschwerks reduziert werden. Ist dies nicht ausreichend, kann ein automatischer Überlastschutz aktiviert werden, der ein Ausschalten des Schneidwerks und/oder Dreschwerks bewirkt.

Anspruch 9 definiert besonders bevorzugte Drehzahländerungen, die einerseits groß genug sind, um aus dem Eigenfrequenzbereich herauszukommen, die andererseits aber auch noch so gering sind, dass das Arbeitsergebnis des jeweiligen Arbeitsorgans und der landwirtschaftlichen Arbeitsmaschine nicht oder zumindest nicht nennenswert beeinflusst wird.

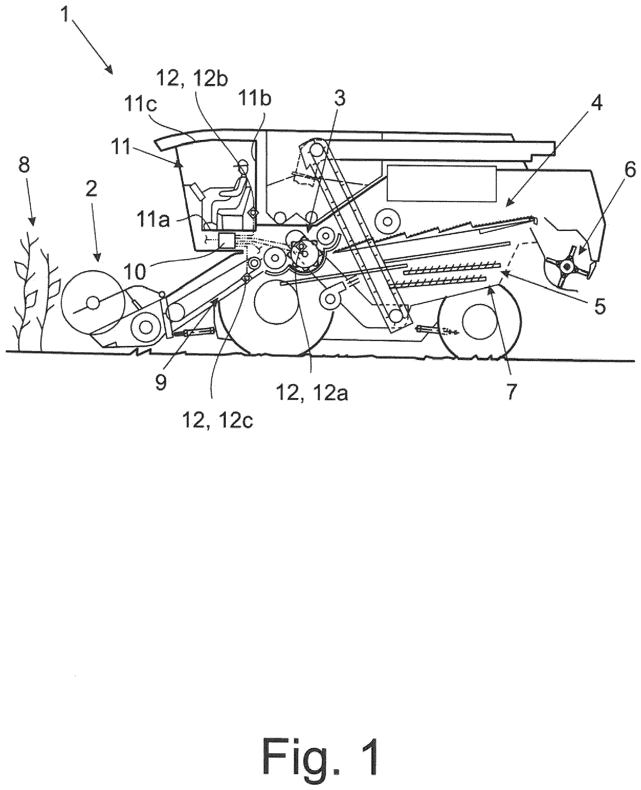

Im Folgenden wird die Erfindung anhand einer lediglich Ausführungsbeispiele darstellenden Zeichnung näher erläutert. In der Zeichnung zeigt
- Fig. 1: eine schematische Ansicht einer vorschlagsgemäßen landwirtschaftlichen Arbeitsmaschine in Form eines Mähdreschers.

Die in Fig. 1 dargestellte vorschlagsgemäße landwirtschaftliche Arbeitsmaschine 1, bei der es sich hier beispielhaft um einen Mähdrescher handelt, ist zur Verarbeitung von Erntegut eingerichtet und umfasst mehrere Arbeitsorgane 2-7 zur Durchführung oder Unterstützung landwirtschaftlicher Arbeit. Hier und vorzugsweise handelt es sich bei den Arbeitsorganen um ein Schneidwerk 2 zum Abtrennen von Erntegut aus einem Feldbestand 8, um ein Dreschwerk 3 zum Entkörnen von Erntegut, um eine dem Dreschwerk 3 nachgeschaltete Trenneinrichtung 4 zum Trennen des Ernteguts in Kornbestandteile und Nichtkornbestandteile, um eine der Trenneinrichtung 4 nachgeschaltete Reinigungs- bzw. Siebeinrichtung 5 zum Entmischen von Erntegut, um einen der Trenneinrichtung 4 nachgeschalteten Häcksler 6 zum Zerkleinern von Erntegut und um eine der Siebeinrichtung 5 nachgeschaltete Überkehr 7 zum Zurückführen von Erntegut zum Dreschwerk 3. Diese Aufzählung von Arbeitsorganen 2-7 ist nicht abschließend zu verstehen. Vielmehr kann die landwirtschaftliche Arbeitsmaschine 1 noch weitere Arbeitsorgane aufweisen. Weiter ist ein Einzugskanal 9 vorgesehen, über den das Erntegut vom Schneidwerk 2 zum Dreschwerk 3 transportiert wird.

Die landwirtschaftliche Arbeitsmaschine 1 bzw. der dargestellte Mähdrescher weist ferner ein Fahrerassistenzsystem 10 zur Einstellung einer optimierten Drehzahl mindestens eines der Arbeitsorgane 2-7 basierend auf erfassten Betriebsparametern der landwirtschaftlichen Arbeitsmaschine 1 auf. Betriebsparameter sind, um lediglich einige Beispiele zu nennen, die Art, die Menge, und die Beschaffenheit des Feldbestands und des Ernteguts. Anhand dieser Betriebsparameter kann das Fahrerassistenzsystem 10 verschiedenste Drehzahlen einstellen, beispielsweise die Drehzahl des Dreschwerks 3, die Drehzahl von Rotoren der Trenneinrichtung (bei dem Ausführungsbeispiel weist die Trenneinrichtung allerdings keine Rotoren, sondern einen Hordenschüttler auf), die Drehzahl des Häckslers 6 etc.

Die rotierenden Bauteile der Arbeitsorgane 2-7 können Schwingungen verursachen, die zu einer Geräusch- und/oder Vibrationsentwicklung in der landwirtschaftlichen Arbeitsmaschine 1 führen. Dabei kann es vorkommen, dass diese Bauteile der entsprechenden Arbeitsorgane 2-7 mit einer Frequenz schwingen, die einer Eigenfrequenz der landwirtschaftlichen Arbeitsmaschine 1 zumindest im Wesentlichen entspricht.

Eine Eigenfrequenz der landwirtschaftlichen Arbeitsmaschine 1 ist beispielsweise eine von ggf. mehreren Eigenfrequenzen eines Bauteils der Fahrerkabine 11 oder eines an der Fahrerkabine 11 angeordneten Bauteils oder eines innerhalb der Fahrerkabine 11 angeordneten Bauteils. Bei dem Bauteil handelt es sich beispielsweise um den Kabinenboden 11a, die Kabinenrückwand 11b oder das Kabinendach 11c der Fahrerkabine 11. Eine Eigenfrequenz der landwirtschaftlichen Arbeitsmaschine 1 kann auch eine von ggf. mehreren Eigenfrequenzen eines Bauteils eines der Arbeitsorgane 2-7 sein, beispielsweise des Dreschkorbs des Dreschwerks 3, eines Rotorkorbs oder des Gehäuses des Häckslers 6. Auch kann es sich um eine von ggf. mehreren Eigenfrequenzen eines Bauteils des Schneidwerks 2 oder eines Bauteils der Überkehr 7 handeln.

Das jeweilige schwingfähige Bauteil, welches eine solche Eigenfrequenz aufweist, wird durch die von dem rotierenden Bauteil des Arbeitsorgans erzeugte Schwingung angeregt und kann dadurch verstärkt mitschwingen bzw. aufschwingen, was zu einer Resonanz führt. Resonanzen können vom Fahrer als unangenehme Geräusche und/oder Vibrationen wahrgenommen werden. Um dem entgegenzuwirken, weist die landwirtschaftliche Arbeitsmaschine 1 eine Sensorik 12 zur Überwachung einer Geräusch- und/oder Vibrationsentwicklung in der landwirtschaftlichen Arbeitsmaschine 1 während ihres Betriebs, beispielsweise während einer Erntefahrt, auf.

Die Sensorik 12 ist so konfiguriert, dass sie einen kritischen Bereich, d.h. einen akustisch ungünstigen Bereich, einer zuvor vom Fahrerassistenzsystem 10 eingestellten optimierten Drehzahl eines Arbeitsorgans 2-7 ermittelt. Die Sensorik 12 erkennt also eine Drehzahl bzw. einen Drehzahlbereich, der zu einer Geräusch- und/oder Vibrationszunahme führt. Die Sensorik 12 veranlasst das Fahrerassistenzsystem 10 dann, die Drehzahl des jeweiligen Arbeitsorgans 2-7 zu ändern, und zwar derart, dass sie außerhalb eines definierten Schwellwertebereichs einer Eigenfrequenz der landwirtschaftlichen Arbeitsmaschine 1 liegt. Die Drehzahl wird also so angepasst, dass eine von dem rotierenden Bauteil erzeugte Schwingung mit einer Frequenz schwingt, die außerhalb des definierten Eigenfrequenzbereichs der landwirtschaftlichen Arbeitsmaschine 1 bzw. des jeweils angeregten und mitschwingenden Bauteils liegt. Dadurch kann wiederum eine resonanzbedingte Geräusch- und/oder Vibrationszunahme von vorne herein verhindert oder zumindest abgeschwächt werden.

Beispielsweise erkennt die Sensorik 12, nachdem das Fahrerassistenzsystem 10 eine bestimmte Drehzahl des Dreschwerks 3 bzw. der Dreschtrommel eingestellt hat, eine Geräusch- und/oder Vibrationszunahme und stuft die Drehzahl als in einem kritischen Bereich befindlich ein. Daraufhin veranlasst die Sensorik 12 das Fahrerassistenzsystem 10, die Drehzahl so zu ändern, dass sie wie zuvor beschrieben außerhalb des definierten Schwellwertebereichs einer Eigenfrequenz der landwirtschaftlichen Arbeitsmaschine 1 liegt. Die Sensorik 12 ändert dabei die Drehzahl des Dreschwerks 3 so geringfügig, dass diese zwar aus dem Eigenfrequenzbereich herauskommt, aber das Arbeitsergebnis des Dreschwerks 3 nicht beeinflusst. Beispielweise liegt die Drehzahl des Dreschwerks 3 zunächst bei 1850 1/min und wird, veranlasst durch die Sensorik 12, vom Fahrerassistenzsystem 10 um +/- 5 1/min auf 1845 1/min oder 1855 1/min geändert.

Vorzugsweise wird bei der vorschlagsgemäßen Lösung die Drehzahl um maximal 15 1/min, bevorzugt um maximal 10 1/min, besonders bevorzugt um maximal 5 1/min, geändert. Zusätzlich oder alternativ wird die Drehzahl um maximal 2 %, bevorzugt um maximal 1,5 %, besonders bevorzugt um maximal 1 %, geändert. Zusätzlich oder alternativ wird die Drehzahl so geändert, dass die Amplitude der mechanischen Schwingungen bzw. Schallwellen mindestens 70%, bevorzugt mindestens 80%, besonders bevorzugt mindestens 90%, kleiner als die maximale Amplitude (Amplitude im Resonanzfall) ist, bzw. die Amplitude hinterher höchstens 10%, bevorzugt höchstens 20%, besonders bevorzugt höchstens 30%, der maximalen Amplitude ist. Die Änderung ist dabei entweder eine Verringerung der Drehzahl oder eine Erhöhung der Drehzahl.

Dabei kann das Fahrerassistenzsystem 10 derart konfiguriert sein, dass, wenn eine Änderung der Drehzahl des jeweiligen Arbeitsorgans 2-7, beispielsweise des Schneidwerks 2 oder Dreschwerks 3, zu keiner ausreichenden Geräusch- und/oder Vibrationsreduzierung führt, ein Überlastschutz aktiviert wird, durch den das entsprechende Arbeitsorgan 2-7 ausgeschaltet wird.

Die Sensorik 12 kann, um den kritischen Bereich der jeweils eingestellten optimierten Drehzahl zu ermitteln, unterschiedlichste Sensoren 12a-12c aufweisen, beispielsweise Sensoren 12a zur Erfassung mechanischer Schwingungen, Sensoren 12b zur Erfassung von Schallwellen und/oder Sensoren 12c zur Erfassung des Gutflusses.

Zur Erfassung mechanischer Schwingungen kann als Sensor 12a beispielsweise ein Beschleunigungssensor und/oder ein Potentiometer vorgesehen sein.

Der Beschleunigungssensor bzw. ein Beschleunigungssensor kann beispielsweise am Kabinenboden 11a, an der Kabinenrückwand 11b, am Kabinendach 11c, am Dreschkorb des Dreschwerks 3, an einer Lagerstelle der Dreschtrommel des Dreschwerks 3, am Rotorkorb einer Trenneinrichtung, an einer Lagerstelle des Rotors der Trenneinrichtung, am Gehäuse des Häckslers 6, an einer Lagerstelle der Häckseltrommel des Häckslers 6, an einer Lagerstelle des Schneidwerks 2 und/oder an einer Lagerstelle der Überkehr 7 angeordnet sein. Grundsätzlich kann ein Beschleunigungssensor an einer dieser Stellen, an mehreren dieser Stellen oder an all diesen Stellen angeordnet sein.

Ein Potentiometer kann beispielsweise jeweils vorgesehen sein zur Bestimmung der Auslenkung am Dreschkorb des Dreschwerks 3, zur Bestimmung der Auslenkung am Rotorkorb einer Trenneinrichtung und/oder zur Bestimmung der Auslenkung am Gehäuse des Häckslers 6. Entsprechend kann das jeweilige Potentiometer mit dem Dreschkorb des Dreschwerks 3, dem Rotorkorb oder dem Gehäuse des Häckslers 6 gekoppelt sein.

Als Sensor 12b kann zur Erfassung von Schallwellen beispielsweise ein Mikrofon an der Fahrerkabine 11 und/oder innerhalb der Fahrerkabine 11 vorgesehen sein.

Als Sensor 12c kann zur Erfassung des Gutflusses ein die Durchsatzmenge und/oder das Durchsatzvolumen bestimmender Sensor beispielsweise im Einzugskanal 9 vorgesehen sein. Auf diese Weise kann ein ungleichmäßiger Gutfluss in der landwirtschaftlichen Arbeitsmaschine 1 erfasst werden, der im weiteren Verlauf zu Drehzahlen führen würde, die im kritischen Bereich liegen. Als Abstellmaßnahme kann die Einstellung des Schneidwerks 2 angepasst werden und somit wieder ein gleichmäßigerer Gutfluss erzeugt werden.

Schließlich kann vorgesehen sein, dass zur Änderung der eingestellten optimierten Drehzahl auf einen Wert außerhalb des besagten Eigenfrequenzbereichs auch der jeweilige Betriebszustand der landwirtschaftlichen Arbeitsmaschine 1 berücksichtigt wird. Insbesondere kann unterschieden werden, ob sich die landwirtschaftliche Arbeitsmaschine 1 im Leerlauf, in einer normalen Belastung, in einer Grenzbelastung oder in einem Überlastfall befindet.

### Bezugszeichenliste

- 1: Landwirtschaftliche Arbeitsmaschine
- 2: Schneidwerk
- 3: Dreschwerk
- 4: Trenneinrichtung
- 5: Siebeinrichtung
- 6: Häcksler
- 7: Überkehr
- 8: Feldbestand
- 9: Einzugskanal
- 10: Fahrerassistenzsystem
- 11: Fahrerkabine
- 11a: Kabinenboden
- 11b: Kabinenrückwand
- 11c: Kabinendach
- 12: Sensorik
- 12a: Sensor
- 12b: Sensor
- 12c: Sensor

## Patentansprüche

1. Landwirtschaftliche Arbeitsmaschine, insbesondere Mähdrescher, mit mehreren Arbeitsorganen (2-7) zur Durchführung oder Unterstützung landwirtschaftlicher Arbeit, mit einem Fahrerassistenzsystem (10) zur Einstellung einer optimierten Drehzahl mindestens eines der Arbeitsorgane (2-7) basierend auf erfassten Betriebsparametern der landwirtschaftlichen Arbeitsmaschine (1),
**dadurch gekennzeichnet,**
**dass** eine Sensorik (12) zur Überwachung einer Geräusch- und/oder Vibrationsentwicklung in der landwirtschaftlichen Arbeitsmaschine (1) während ihres Betriebs vorgesehen ist, die konfiguriert ist, einen kritischen Bereich einer eingestellten optimierten Drehzahl zu ermitteln, und das Fahrerassistenzsystem (10) veranlasst, diese so zu ändern, dass sie außerhalb eines definierten Schwellwertebereichs einer Eigenfrequenz der landwirtschaftlichen Arbeitsmaschine (1) liegt.

2. Landwirtschaftliche Arbeitsmaschine nach Anspruch 1, **dadurch gekennzeichnet, dass** die Eigenfrequenz eine Eigenfrequenz eines Bauteils der Fahrerkabine (11), eines Bauteils an der Fahrerkabine (11) und/oder eines Bauteils innerhalb der Fahrerkabine (11) der landwirtschaftlichen Arbeitsmaschine (1) ist.

3. Landwirtschaftliche Arbeitsmaschine nach Anspruch 1 oder 2, **dadurch gekennzeichnet, dass** die Eigenfrequenz eine Eigenfrequenz eines Bauteils des Arbeitsorgans (2-7) ist, dessen eingestellte optimierte Drehzahl geändert wird, oder eines Bauteils eines anderen Arbeitsorgans (2-7) der landwirtschaftlichen Arbeitsmaschine (1) ist.

4. Landwirtschaftliche Arbeitsmaschine nach einem der vorhergehenden Ansprüche, **dadurch gekennzeichnet, dass** die Sensorik (12) zur Ermittlung des kritischen Bereichs der eingestellten optimierten Drehzahl mindestens einen Sensor (12a) zur Erfassung mechanischer Schwingungen, mindestens einen Sensor (12b) zur Erfassung von Schallwellen und/oder mindestens einen Sensor (12c) zur Erfassung des Gutflusses aufweist.

5. Landwirtschaftliche Arbeitsmaschine nach einem der vorhergehenden Ansprüche, **dadurch gekennzeichnet,**
**dass** zur Erfassung mechanischer Schwingungen mindestens ein Beschleunigungssensor vorgesehen ist, wobei mindestens ein Beschleunigungssensor jeweils am Kabinenboden (11 a), an der Kabinenrückwand (11b), am Kabinendach (11c), am Dreschkorb eines Dreschwerks (3), an der Lagerstelle der Dreschtrommel eines Dreschwerks (3), am Rotorkorb einer Trenneinrichtung, an der Lagerstelle des Rotors einer Trenneinrichtung, am Gehäuse eines Häckslers (6), an der Lagerstelle einer Häckseltrommel eines Häckslers (6), an einer Lagerstelle eines Schneidwerks (2) und/oder an einer Lagerstelle einer Überkehr (7) angeordnet ist,
und/oder,
**dass** zur Erfassung mechanischer Schwingungen mindestens ein Potentiometer zur Bestimmung der Auslenkung am Dreschkorb eines Dreschwerks (3), zur Bestimmung der Auslenkung am Rotorkorb einer Trenneinrichtung und/oder zur Bestimmung der Auslenkung am Gehäuse eines Häckslers (6) vorgesehen ist.

6. Landwirtschaftliche Arbeitsmaschine nach einem der vorhergehenden Ansprüche, **dadurch gekennzeichnet,**
**dass** zum Erfassen von Schallwellen mindestens ein Mikrofon an der Fahrerkabine (11) und/oder innerhalb der Fahrerkabine (11) vorgesehen ist, und/oder,
**dass** zur Erfassung des Gutflusses mindestens ein die Durchsatzmenge und/oder mindestens ein das Durchsatzvolumen bestimmender Sensor im Einzugskanal (9) vorgesehen ist.

7. Landwirtschaftliche Arbeitsmaschine nach einem der vorhergehenden Ansprüche, **dadurch gekennzeichnet, dass** eine Änderung der eingestellten optimierten Drehzahl unter weiterer Berücksichtigung des Betriebszustands der landwirtschaftlichen Arbeitsmaschine (1) erfolgt, wobei der Betriebszustand gewählt ist aus der Gruppe umfassend einen Leerlauf-Zustand, einen normalen Belastungszustand, einen Grenzbelastungszustand und einen Überlastzustand.

8. Landwirtschaftliche Arbeitsmaschine nach einem der vorhergehenden Ansprüche, **dadurch gekennzeichnet, dass** nach Ermittlung des kritischen Bereichs einer eingestellten optimierten Drehzahl der Erntegutdurchsatz durch Änderung der Drehzahl des Schneidwerks (2) und/oder Dreschwerks (3) verringert wird und/oder nach einer Änderung der Drehzahl des Schneidwerks (2) und/oder Dreschwerks (3) als Überlastschutz das Schneidwerk (2) und/oder Dreschwerk (3) ausgeschaltet wird.

9. Landwirtschaftliche Arbeitsmaschine nach einem der vorhergehenden Ansprüche, **dadurch gekennzeichnet, dass** nach Ermittlung des kritischen Bereichs einer eingestellten optimierten Drehzahl diese um maximal 15 1/min verringert oder erhöht wird oder diese um maximal 2% verringert oder erhöht wird oder diese verringert oder erhöht wird, bis die Amplitude der mechanischen Schwingungen bzw. Schallwellen mindestens 70% kleiner als die maximale Amplitude ist.

## Claims

1. An agricultural working machine, in particular a combine harvester, comprising a plurality of working members (2-7) for carrying out or supporting agricultural work, and a driver assist system (10) for setting an optimised speed of rotation of at least one of the working members (2-7) based on detected operating parameters of the agricultural working machine (1), **characterised in that** there is provided a sensor system (12) for monitoring noise and/or vibration development in the agricultural working machine (1) during operation thereof, which is configured to determine a critical range of a set optimised speed, and the driver assist system (10) causes this to be changed in such a way that it lies outside a defined threshold value range of a natural frequency of the agricultural working machine (1).

2. An agricultural working machine according to claim 1 **characterised in that** the natural frequency is a natural frequency of a component of the driver's cab (11), a component at the driver's cab (11) and/or a component within the driver's cab (11) of the agricultural working machine (1).

3. An agricultural working machine according to claim 1 or claim 2 **characterised in that** the natural frequency is a natural frequency of a component of the working member (2-7), the set optimised speed of which is changed, or a component of another working member (2-7) of the agricultural working machine (1).

4. An agricultural working machine according to one of the preceding claims **characterised in that** the sensor system (12) for determining the critical range of the set optimised speed of rotation has at least one sensor (12a) for detecting mechanical vibrations, at least one sensor (12b) for detecting sound waves and/or at least one sensor (12c) for detecting the crop material flow.

5. An agricultural working machine according to one of the preceding claims **characterised in that** there is provided at least one acceleration sensor for detecting mechanical vibrations, at least one acceleration sensor being respectively arranged at the cab floor (11 a), at the cab rear wall (11b), at the cab roof (11c), at the concave of a threshing unit (3), at the bearing location of the threshing drum of a threshing unit (3), at the rotor concave of a separating device, at the bearing location of the rotor of a separating device, at the housing of a chopper (6), at the bearing location of a chopping drum of a chopper (6), at a bearing location of a cutting unit (2) and/or at a bearing location of a return (7) and/or for determining mechanical vibrations there is provided at least one potentiometer for determining the deflection at the concave of a threshing unit (3), for determining the deflection at the rotor concave of a separating device and/or for determining the deflection at the housing of a chopper (6).

6. An agricultural working machine according to one of the preceding claims **characterised in that** for detecting sound waves there is provided at least one microphone at the driver's cab (11) and/or inside the driver's cab (11) and/or for detecting the crop material flow there is provided in the intake passage (9) at least one sensor for determining the throughput quantity and/or at least one sensor for determining the throughput volume.

7. An agricultural working machine according to one of the preceding claims **characterised in that** a change in the set optimised speed of rotation is effected taking into account the operating state of the agricultural working machine (1), the operating state being selected from the group comprising an idle state, a normal load state, a limit load state and an overload state.

8. An agricultural machine according to one of the preceding claims **characterised in that** after the critical range of a set optimised speed is determined the crop material throughput is reduced by changing the speed of the cutting device (2) and/or the threshing unit (3) and/or after a change in the speed of the cutting unit (2) and/or the threshing unit (3) the cutting unit (2) and/or threshing unit (3) is switched off as overload protection.

9. An agricultural machine according to one of the preceding claims **characterised in that** after determining the critical range of a set optimised speed same is reduced or increased by a maximum of 15 1/min or is reduced or increased by a maximum of 2% or is reduced or increased until the amplitude of the mechanical vibrations or sound waves is at least 70% less than the maximum amplitude.

## Revendications

1. Engin agricole, en particulier moissonneuse-batteuse, comprenant plusieurs organes de travail (2 à 7) pour la réalisation ou l'assistance de travaux agricoles, comprenant un système d'assistance du conducteur (10) destiné au réglage d'une vitesse de rotation optimisée d'au moins un des organes de travail (2 à 7), sur la base de paramètres de fonctionnement recueillis de l'engin agricole (1),
**caractérisé en ce qu'**
il est prévu un système de capteurs (12) destiné à la surveillance de la génération de bruits et/ou de vibrations dans l'engin agricole (1) pendant son fonctionnement, lequel système est configuré pour déterminer une plage critique d'une vitesse de rotation optimisée réglée et fait en sorte que le système d'assistance du conducteur (10) modifie celle-ci de manière à ce qu'elle se situe à l'extérieur d'une plage définie de valeurs seuils d'une fréquence propre de l'engin agricole (1).

2. Engin agricole selon la revendication 1, **caractérisé en ce que** la fréquence propre est une fréquence propre d'un élément de la cabine du conducteur (11), d'un élément sur la cabine du conducteur (11) et/ou d'un élément à l'intérieur de la cabine du conducteur (11) de l'engin agricole (1).

3. Engin agricole selon la revendication 1 ou 2, **caractérisé en ce que** la fréquence propre est une fréquence propre d'un élément de l'organe de travail (2 à 7) dont la vitesse de rotation optimisée réglée est modifiée, ou d'un élément d'un autre organe de travail (2 à 7) de l'engin agricole (1).

4. Engin agricole selon l'une des revendications précédentes, **caractérisé en ce que**, pour déterminer la plage critique de la vitesse de rotation optimisée réglée, le système de capteurs (12) présente au moins un capteur (12a) destiné à détecter des oscillations mécaniques, au moins un capteur (12b) destiné à détecter des ondes sonores et/ou au moins un capteur (12c) destiné à détecter le flux des produits.

5. Engin agricole selon l'une des revendications précédentes, **caractérisé en ce que**
pour détecter des vibrations mécaniques, il est prévu au moins un capteur d'accélération, sachant qu'au moins un capteur d'accélération est disposé respectivement sur le plancher de la cabine (11a), sur la paroi arrière de la cabine (11b), sur le toit de la cabine (11c), sur le contre-batteur d'un batteur (3), sur le point de support du tambour de battage d'un batteur (3), sur la cage du rotor d'un dispositif de séparation, sur le point de support du rotor d'un dispositif de séparation, sur le carter d'un hacheur (6), sur le point de support d'un tambour de hachage d'un hacheur (6), sur un point de support d'un mécanisme de coupe (2) et/ou sur un point de support d'un dispositif à ôtons (7),
et/ou **en ce que**
pour détecter des vibrations mécaniques, au moins un potentiomètre est prévu pour déterminer la déviation sur le contre-batteur d'un batteur (3), pour déterminer la déviation sur la cage du rotor d'un dispositif de séparation et/ou pour déterminer la déviation sur le carter d'un hacheur (6).

6. Engin agricole selon l'une des revendications précédentes, **caractérisé en ce que**
pour détecter des ondes sonores, il est prévu au moins un microphone sur la cabine du conducteur (11) et/ou à l'intérieur de la cabine du conducteur (11),
et/ou **en ce que**
pour détecter le flux des produits, il est prévu dans le conduit d'alimentation (9) au moins un capteur déterminant la quantité de débit et/ou au moins un capteur déterminant le volume de débit.

7. Engin agricole selon l'une des revendications précédentes, **caractérisé en ce qu'**une modification de la vitesse de rotation optimisée réglée est effectuée en tenant compte par ailleurs de l'état de fonctionnement de l'engin agricole (1), l'état de fonctionnement étant sélectionné dans le groupe comprenant un état de marche à vide, un état de charge normale, un état de charge limite et un état de surcharge.

8. Engin agricole selon l'une des revendications précédentes, **caractérisé en ce que**, après la détermination de la plage critique d'une vitesse de rotation optimisée réglée, le débit des produits récoltés est réduit par modification de la vitesse de rotation du mécanisme de coupe (2) et/ou du batteur (3), et/ou après modification de la vitesse de rotation du mécanisme de coupe (2) et/ou du batteur (3), le mécanisme de coupe (2) et/ou le batteur (3) est arrêté au titre de la protection contre la surcharge.

9. Engin agricole selon l'une des revendications précédentes, **caractérisé en ce que**, après la détermination de la plage critique d'une vitesse de rotation optimisée réglée, celle-ci est réduite ou augmentée d'au maximum 15 1/min ou celle-ci est réduite ou augmentée d'au maximum 2 %, ou celle-ci est réduite ou augmentée jusqu'à ce que l'amplitude des vibrations mécaniques ou des ondes sonores soit d'au moins 70 % inférieure à l'amplitude maximale.
